(19) **Europäisches Patentamt / European Patent Office / Office européen des brevets**

(11) **EP 4 195 061 B1**

(12) **FASCICULE DE BREVET EUROPEEN**

(45) Date de publication et mention de la délivrance du brevet:
**28.08.2024 Bulletin 2024/35**

(21) Numéro de dépôt: **22211784.8**

(22) Date de dépôt: **06.12.2022**

(51) Classification Internationale des Brevets (IPC):
**G06F 15/78** (2006.01) **G06N 3/063** (2023.01)

(52) Classification Coopérative des Brevets (CPC):
**G06F 15/7839; G06N 3/063; G06N 3/084; G06N 3/0464**

(54) **CALCULATEUR D'ALGORITHME RÉALISÉ À PARTIR DE MÉMOIRES À TECHNOLOGIES MIXTES**

ALGORITHMUSRECHNER AUS SPEICHER MIT GEMISCHTEN TECHNOLOGIEN

ALGORITHM CALCULATOR REALIZED FROM MIXED-TECHNOLOGY MEMORIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.12.2021 FR 2113159**

(43) Date de publication de la demande:
**14.06.2023 Bulletin 2023/24**

(73) Titulaire: **Commissariat à l'énergie atomique et aux énergies alternatives
75015 Paris (FR)**

(72) Inventeurs:
- **MESQUIDA, Thomas
  38054 GRENOBLE (FR)**
- **RUMMENS, François
  38054 GRENOBLE (FR)**
- **GRENOUILLET, Laurent
  38054 GRENOBLE (FR)**
- **VALENTIAN, Alexandre
  38054 GRENOBLE (FR)**
- **VIANELLO, Elisa
  38054 GRENOBLE (FR)**

(74) Mandataire: **Atout PI Laplace
Immeuble Up On
25 Boulevard Romain Rolland
CS 40072
75685 Paris Cedex 14 (FR)**

(56) Documents cités:
- **GIORDANO MASSIMO ET AL: "CHIMERA: A 0.92 TOPS, 2.2 TOPS/W Edge AI Accelerator with 2 MByte On-Chip Foundry Resistive RAM for Efficient Training and Inference", 2021 SYMPOSIUM ON VLSI CIRCUITS, JSAP, 13 June 2021 (2021-06-13), pages 1 - 2, XP033948375, DOI: 10.23919/VLSICIRCUITS52068.2021.9492347**
- **SURI MANAN ET AL: "Neuromorphic hybrid RRAM-CMOS RBM architecture", 2015 15TH NON-VOLATILE MEMORY TECHNOLOGY SYMPOSIUM (NVMTS), IEEE, 12 October 2015 (2015-10-12), pages 1 - 6, XP032894029, DOI: 10.1109/NVMTS.2015.7457484**
- **GARBIN DANIELE ET AL: "HfO2-Based OxRAM Devices as Synapses for Convolutional Neural Networks", IEEE TRANSACTIONS ON ELECTRON DEVICES, IEEE, USA, vol. 62, no. 8, 1 August 2015 (2015-08-01), pages 2494 - 2501, XP011663892, ISSN: 0018-9383, [retrieved on 20150721], DOI: 10.1109/TED.2015.2440102**

## Description

## Champ d'application

L'invention concerne généralement les calculateurs pour exécuter un algorithme de calcul sur des données numériques et plus particulièrement une architecture de calculateur de réseaux neuro-morphiques numériques présentant des plans mémoires à technologies mixtes d'au moins deux types. Chaque type de mémoire présente un avantage particulier pour la réalisation d'une opération parmi les opérations d'apprentissage ou d'inférence ou plus généralement d'une opération nécessitant un nombre important ou peu important de modification de valeurs calculées lors de cette opération.

## Problème soulevé

Les réseaux de neurones artificiels constituent des modèles de calcul imitant le fonctionnement des réseaux de neurones biologiques. Les réseaux de neurones artificiels comprennent des neurones interconnectés entre eux par des synapses, chaque synapse est attachée à un poids implémenté par exemple par des mémoires numériques. Les réseaux de neurones artificiels sont utilisés dans différents domaines de traitement du signal (visuel, sonore, ou autre) comme par exemple dans le domaine de la classification d'image ou de la reconnaissance d'image.

Dans le contexte de l'intelligence artificielle embarquée, les puces électroniques implémentant des réseaux de neurones (profonds et/ou impulsionnels) nécessitent une importante capacité mémoire pour stocker les paramètres de ces réseaux. La mise en oeuvre de réseaux de neurones se décompose en deux phases : l'apprentissage et l'inférence.

La phase d'apprentissage consiste à modifier les coefficients synaptiques du réseau suivant un algorithme dit d'apprentissage pour les faire converger vers des valeurs telles que le réseau accomplisse la tâche pour laquelle il est entraîné. La phase d'inférence consiste à appliquer aux données d'entrée des calculs basés sur les coefficients synaptiques préalablement mis à jour pendant la phase d'apprentissage.

Dans le cas d'un accélérateur de réseaux de neurones, la vie du système commence par une phase d'apprentissage intensive. Suite à cette opération d'apprentissage le circuit réalise des opérations d'inférence. Il en résulte que les systèmes d'intelligence artificielle, incluant une opération d'apprentissage, doivent en plus implémenter des méthodes de modification des coefficients synaptiques pour répondre à une tache donnée. Du point de vue de la problématique de stockage des paramètres du réseau, et plus particulièrement des coefficients synaptiques, les deux opérations susmentionnées présentent une différence importante :

- durant la phase d'apprentissage les poids synaptiques sont régulièrement modifiés, donc les cellules mémoire qui stockent leurs valeurs subissent plusieurs itérations d'opérations de réécriture intensives ;

- durant la phase d'inférence les poids synaptiques sont figés et les cellules mémoires concernées ne subissent plus d'action d'écriture mais un nombre considérable d'opérations de lecture.

De façon plus générale, ce type de différence peut exister dans d'autres algorithmes de calcul qui implémentent plusieurs phases de calcul : une première phase au cours de laquelle les variables manipulées subissent de nombreuses modifications et une seconde phase au cours de laquelle les mêmes variables sont figées ou subissent peu de modifications.

Les différents types de mémoires non volatiles présentent des candidats intéressants pour réaliser les moyens de stockage des coefficients synaptiques d'un réseau de neurones. Cependant, les différentes technologies de mémoires non-volatiles présentent des caractéristiques différentes de fiabilité et de robustesse face à un nombre considérable d'opérations de lecture et d'écriture subies. Pour qualifier la robustesse des différentes technologies de mémoires, on définit les caractéristiques suivantes :

- On entend par « cyclabilité en écriture » le nombre maximal de cycles d'écriture subis par une cellule mémoire avant sa défaillance structurelle. Il s'agit alors d'un critère de caractérisation de la robustesse technologique des cellules mémoire face à un nombre intense d'opérations d'écriture ;

- On entend par « endurance en lecture » le nombre maximal de cycles de lecture subis par une cellule mémoire avant sa défaillance structurelle. Il s'agit alors d'un critère de caractérisation de la robustesse technologique des cellules mémoire face à un nombre intense d'opérations de lecture ;

- On entend par « énergie de lecture » l'énergie nécessaire pour lire un bit de la cellule mémoire ; elle s'exprime en Joule par bit. Il s'agit alors d'un critère de caractérisation de la performance énergétique des cellules mémoire lors de la réalisation d'une opération de lecture ;

- On entend par « énergie d'écriture » l'énergie nécessaire pour écrire un bit de la cellule mémoire; elle s'exprime en Joule par bit. Il s'agit alors d'un critère de caractérisation de la performance énergétique des cellules mémoire lors de la réalisation d'une opération d'écriture.

De plus, l'augmentation considérable du nombre d'opérations de lecture et d'écriture pour implémenter un réseau de neurones est très énergivore pour un système dédié à une application mobile (téléphonie, véhicule autonome, robotique..). Il existe donc un besoin pour des calculateurs aptes à mettre en oeuvre un réseau de neurones avec une complexité limitée permettant de satisfaire aux contraintes des systèmes embarqués et des applications visées.

Dans ce contexte, un problème technique à résoudre est l'amélioration de la performance énergétique et de la robustesse technologique des moyens de stockages des coefficients synaptiques d'un circuit calculateur, notamment un circuit implémentant un réseau de neurones apte à réaliser une opération d'apprentissage et une opération d'inférence nécessitant un grand nombre d'opérations d'écriture et de lecture.

### Art antérieur/ Restrictions de l'état de l'art

La publication scientifique intitulée « CHIMERA: A 0.92 TOPS, 2.2 TOPS/W Edge AI Accelerator with 2 MByte On-Chip Foundry Resistive RAM for Efficient Training and Inference» de Giordano et al décrit un circuit calculateur de réseau de neurones apte à réaliser des opérations d'apprentissage et d'inférence dans lequel les moyens de stockage sont réalisés par des mémoires résistives à base d'oxyde OxRAM. Pour améliorer la robustesse technologique des moyens de stockages des coefficients synaptiques, la publication propose un algorithme d'apprentissage réduisant le nombre d'opérations d'écriture permettant de prolonger la durée de vie du circuit calculateur de réseau de neurones. L'inconvénient de cette solution réside dans la complexité et la spécificité de l'algorithme d'apprentissage dans le but de réduire le nombre d'opérations d'écriture pendant l'apprentissage.

### Réponse au problème et apport solution

Pour pallier les limitations des solutions existantes en ce qui concerne l'amélioration de la performance énergétique et de la robustesse technologique des moyens de stockages d'un circuit calculateur destiné à exécuter un algorithme de calcul sur des données numériques, l'invention propose plusieurs modes de réalisation d'un circuit comprenant au moins deux types de technologies de mémoires pour le stockage des paramètres du calculateur. Le premier type de mémoires présente une forte endurance en lecture et une basse énergie en lecture le rendant plus performant pour réaliser une opération d'inférence nécessitant un nombre considérable de lectures des coefficients synaptiques.

Le second type de mémoire présente une forte endurance en écriture et une basse énergie d'écriture le rendant plus adapté pour réaliser une opération d'apprentissage nécessitant plusieurs itérations d'écriture des coefficients synaptiques.

Plus particulièrement, l'invention propose un calculateur de réseau de neurones, à titre d'exemple non limitatif, basé sur des technologies émergentes de mémoires non volatiles complémentaires en matière de robustesse face à une forte intensité d'opérations de lecture et d'écriture. A titre d'exemple non limitatif, il s'agit de la combinaison d'une part des mémoires à polarisation ferroélectrique FeRAM adaptées à l'apprentissage et, d'autre part, des mémoires résistives à base d'oxyde OxRAM adaptées à l'inférence.

L'invention propose en outre un procédé d'apprentissage et d'inférence compatible avec l'architecture proposée permettant de configurer l'utilisation de l'un des deux types de mémoires de manière à adapter les moyens de stockage utilisés selon les spécificités de l'opération réalisée (inférence ou apprentissage).

Nous allons décrire l'invention dans le contexte applicatif d'un réseau de neurones artificiels à titre illustratif sans perte de généralité. Les caractéristiques de l'invention restent valables pour tout calculateur d'exécution d'algorithmes présentant deux configurations (ou phases de fonctionnement) tel que la première configuration nécessite un nombre important d'opérations d'écriture (ou mise à jour) des paramètres du calculateur et tel que la seconde configuration nécessite un nombre important d'opérations de lecture desdits paramètres. Pour un paramètre numérique de calcul, la classification des bits par nombre d'écritures et de lectures subies pendant l'exécution d'une configuration de calcul est réalisable plus généralement par des statistiques appliquées sur des vecteurs de test.

### Résumé /Revendications

L'invention a pour objet un calculateur pour exécuter un algorithme de calcul impliquant une variable numérique selon au moins deux phases de fonctionnement,

la première phase de fonctionnement comprenant une pluralité d'itérations d'une première opération d'exploitation de la variable numérique et d'une opération de mise à jour de la variable numérique ;

la seconde phase de fonctionnement comprenant une seconde opération d'exploitation de la variable numérique ;

chaque variable numérique étant décomposée en un premier sous-mot binaire composé des bits de poids forts de la variable et un second sous-mot binaire composé des bits de poids faibles de la variable. Le calculateur comprenant :

- un étage mémoire comprenant :

  ◦ un premier ensemble de mémoires pour stocker le premier sous-mot de chaque variable numérique; chaque mémoire dudit premier ensemble étant non volatile et présentant une première endurance en lecture et une première cyclabilité en écriture ;

EP 4 195 061 B1

∘ un second ensemble de mémoires pour stocker le second sous-mot de chaque variable numérique ;

chaque mémoire dudit second ensemble présentant une seconde endurance en lecture et une seconde cyclabilité en écriture ;

- un circuit de traitement de variables configuré pour générer pour chaque variable numérique au moins une variable opérationnelle approximée de la variable numérique à partir du premier et du second sous-mot selon la phase de fonctionnement choisie ;
- un réseau de calcul pour implémenter des opérations de calcul ayant pour opérande l'au moins une variable opérationnelle selon la phase de fonctionnement choisie ;

la première endurance en lecture étant supérieure à la seconde endurance en lecture et la première cyclabilité en écriture étant inférieure à la seconde cyclabilité en écriture.

Selon un aspect particulier de l'invention, le premier sous-mot comprend N bits, le second sous-mot comprend M+K bits, avec M et N deux entiers naturels non nuls et K un entier naturel ; et les K bits de poids forts du second sous-mot présentent une intersection de même poids avec le premier sous-mot étant répétés dans le premier et le second ensemble de mémoires de poids. Le circuit de traitement de variables comprend :

- Un circuit réducteur de variables pour générer au moins une première variable opérationnelle de O bits avec O un entier naturel non nul inférieur à M+N. Ladite une première variable opérationnelle correspondant à l'arrondi ou la troncature du second sous-mot concaténé avec les N-K bits de poids forts du premier sous-mot.

Selon un aspect particulier de l'invention, le circuit de traitement de variables comprend en outre un circuit d'assemblage configuré pour générer une deuxième variable opérationnelle de M+N bits en concaténant, pour chaque variable numérique, le second sous-mot avec les N-K bits de poids forts du premier sous-mot lors de l'exécution de l'opération de mise à jour de la variable numérique.

Selon un aspect particulier de l'invention, le calculateur comprend en outre un circuit de mise à jour configuré pour réaliser les étapes suivantes pour chaque variable numérique pour chaque itération de la première phase de fonctionnement, pendant l'opération de mise à jour de la variable numérique :

- calculer un gradient pour la première variable opérationnelle ;
- et appliquer ledit gradient à la deuxième variable opérationnelle ;
- mettre à jour le second sous-mot dans le second ensemble de mémoires de poids en copiant les bits de même poids de la deuxième variable opérationnelle suite à l'application du gradient.

Selon un aspect particulier de l'invention, le circuit de mise à jour est configuré pour réaliser l'étape suivante pour chaque variable numérique, suite à la dernière itération de la première phase de fonctionnement :

- mettre à jour les K bits d'intersection dans le premier sous-mot en recopiant les K bits de même poids préalablement mis à jour à partir du second sous-mot

Selon un aspect particulier de l'invention, lors de la seconde opération d'exploitation, pour chaque variable numérique:

- le circuit de traitement de variables est configuré pour générer une troisième variable opérationnelle comprenant au moins le sous-mot ;
- le réseau de calcul reçoit comme opérande la troisième variable opérationnelle.

Selon un aspect particulier de l'invention, la troisième variable opérationnelle comprend en outre au moins une partie du second sous-mot.

Selon un aspect particulier de l'invention, la variable numérique est sous format virgule flottante comprenant une mantisse, un exposant et un signe. Le premier sous-mot comprend au moins l'exposant et le signe. Le second sous-mot comprend au moins la mantisse.

Selon un aspect particulier de l'invention, le premier ensemble de mémoires est une pluralité de mémoires résistives à base d'oxyde OxRAM.

Selon un aspect particulier de l'invention, le second ensemble de mémoires est une pluralité de mémoires à polarisation ferroélectrique FeRAM.

Selon un aspect particulier de l'invention, les mémoires à polarisation ferroélectrique FeRAM et les mémoires résistives à base d'oxyde OxRAM sont réalisées sur le même substrat semiconducteur.

Selon un aspect particulier de l'invention, le calculateur est configuré pour mettre en oeuvre un réseau de neurones artificiels, le réseau de neurones étant composé d'une succession de couches étant chacune constituée d'un ensemble de neurones, chaque couche étant associée à un ensemble de coefficients synaptiques. Les variables numériques sont les coefficients synaptiques du réseau de neurones. La première phase de fonctionnement est une phase d'apprentissage. La seconde phase de fonctionnement est une phase d'inférence. La première opération d'exploitation des variables numériques est une propagation des données d'entrée d'apprentissage ou rétropropagation des erreurs d'apprentissage. La seconde opération d'exploitation est une propagation des données d'entrée d'inférence. Le réseau de calcul

4

est apte à calculer des sommes pondérées par variable opérationnelle.

## Brève Description des Dessins

D'autres caractéristiques et avantages de la présente invention apparaîtront mieux à la lecture de la description qui suit en relation aux dessins annexés suivants.

[Fig. 1] représente un exemple de réseau de neurones contenant des couches conventionnelles et des couches entièrement connectées.

[Fig. 2a] illustre sur un exemple d'un couple de couches de neurones entièrement connectées appartenant à un réseau de neurones, le fonctionnement du réseau pendant une phase d'inférence.

[Fig. 2b] illustre sur un exemple d'un couple de couches de neurones entièrement connectées appartenant à un réseau de neurones, le fonctionnement du réseau pendant une phase de rétropropagation.

[Fig. 3a] illustre un diagramme fonctionnel d'un mode de réalisation selon l'invention d'un calculateur configuré pour réaliser une opération d'apprentissage.

[Fig. 3b] illustre des sous-mots d'un coefficient synaptique, sur un mot binaire, distribués sur les deux ensembles de mémoires du calculateur selon l'invention.

[Fig. 3c] illustre les étapes d'un procédé d'apprentissage exécuté par le calculateur de réseau de neurones selon l'invention.

[Fig. 4a] illustre un diagramme fonctionnel d'un circuit de traitement de variables selon l'invention pour générer les variables opérationnelles d'un coefficient synaptiques.

[Fig. 4b] illustre le mécanisme de génération des variables opérationnelles d'un coefficient synaptique selon l'invention.

[Fig. 5a] illustre un premier exemple de la mise à jour des sous-mots d'un coefficient synaptique dans les deux ensembles de mémoires lors d'une opération d'apprentissage.

[Fig. 5b] illustre un second exemple de la mise à jour des sous-mots d'un coefficient synaptique dans les deux ensembles de mémoires lors d'une opération d'apprentissage.

[Fig. 6] illustre un diagramme fonctionnel d'un mode de réalisation selon l'invention d'un calculateur configuré pour réaliser une opération d'inférence.

[Fig. 7] illustre des sous-mots d'un coefficient synaptique en format « virgule flottante » distribués sur les deux ensembles de mémoires du calculateur selon l'invention.

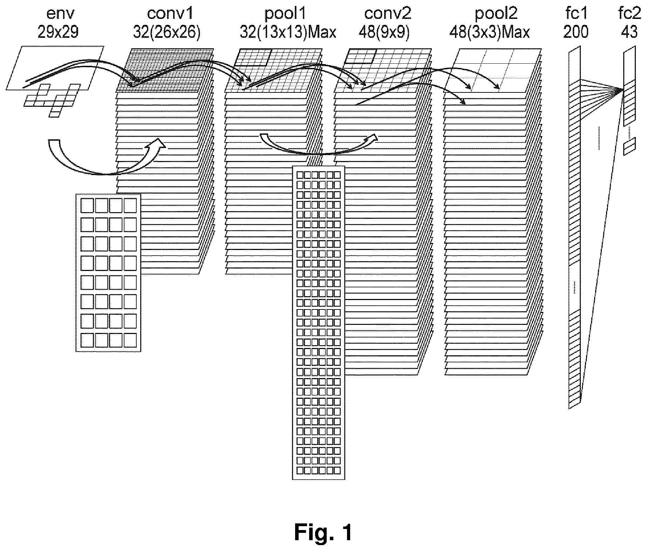

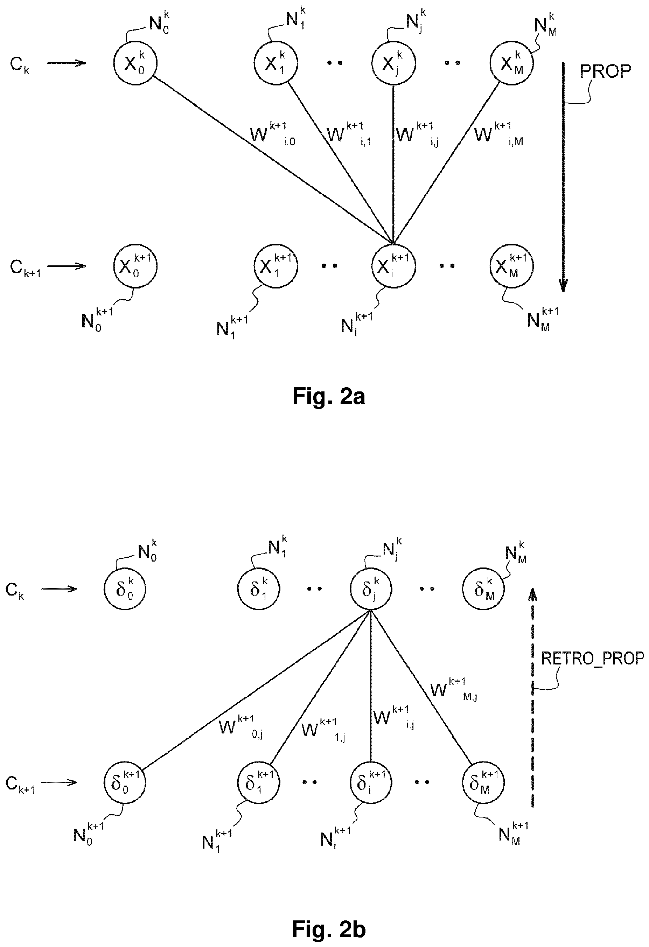

A titre d'exemple non limitatif, on commence par décrire un exemple de structure globale d'un réseau de neurones illustré par les figures 1, 2a et 2b.

La figure 1 représente l'architecture globale d'un exemple de réseau pour la classification d'images. Les images en bas de la figure 1 représentent un extrait des noyaux de convolution de la première couche. Un réseau de neurones artificiel (encore appelé réseau de neurones « formel » ou désigné simplement par l'expression « réseau de neurones » ci-après) est constitué d'une ou plusieurs couches de neurones, interconnectées entre elles.

Chaque couche est constituée d'un ensemble de neurones, qui sont connectés à une ou plusieurs couches précédentes. Chaque neurone d'une couche peut être connecté à un ou plusieurs neurones d'une ou plusieurs couches précédentes. La dernière couche du réseau est appelée « couche de sortie ». Les neurones sont connectés entre eux par des synapses associées à des coefficients synaptiques, qui pondèrent l'efficacité de la connexion entre les neurones, constituent les paramètres réglables d'un réseau. Les coefficients synaptiques peuvent être positifs ou négatifs.

Les données d'entrée du réseau de neurones correspondent aux données d'entrée de la première couche du réseau. En parcourant la succession des couches de neurones, les données de sortie calculées par une couche intermédiaire correspondent aux données d'entrée de la couche suivante. Les données de sortie de la dernière couche de neurones correspondent aux données de sortie du réseau de neurones. Il s'agit dans ce cas d'une propagation des données dans le réseau pour réaliser une opération d'inférence.

La figure 2a illustre un schéma d'un couple de couches de neurones entièrement connectées appartenant à un réseau de neurones pendant une phase d'inférence. La figure 2a sert à comprendre les mécanismes de base des calculs dans ce type de couches pendant une phase d'inférence où les données sont propagées à partir des neurones de la couche $C_k$ de rang k vers les neurones de la couche suivante $C_{k+1}$ de rang k+1.

En suivant le sens de propagation « PROP » indiqué sur la figure 2a, lors d'une phase d'inférence, la donnée $X_i^{k+1}$ associée au neurone $N_i^{k+1}$ de la couche $C_{k+1}$ est calculée par la formule suivante :

$$x_i^{k+1} \;=\; S(\textstyle\sum_j (x_j^k \cdot w_{ij}^{k+1})) + b_i$$

avec $b_i$ un coefficient appelé "biais" et $S(x)$ une fonction non-linéaire, comme une fonction ReLu par exemple.

Ainsi, pendant une opération d'inférence, le circuit calculateur réalise un grand nombre d'opérations de lectures des coefficients synaptiques à partir des moyens de stockage pour calculer les sommes pondérés détaillés précédemment pour chaque neurone de chaque couche.

La phase d'apprentissage d'un réseau de neurones comprend plusieurs itérations des opérations suivantes : une propagation des données d'au moins un échantillon, un calcul d'erreurs à la sortie du réseau, une rétropropagation d'erreurs et la mise à jour des coefficients synaptiques.

Plus spécifiquement, la première étape de propagation pour apprentissage consiste à exécuter le traitement d'un ensemble d'images d'entrée de la même manière qu'en inférence. Lorsque la dernière couche de sortie est calculée, la deuxième étape de calcul de fonction de coût est déclenchée. Le résultat de l'étape précédente au niveau de la dernière couche de réseau est comparé au moyen d'une fonction de coût avec des références labellisées. La dérivée de la fonction de coût est calculée pour obtenir pour chaque neurone de la couche de sortie finale une erreur d. L'étape suivante consiste à rétro-propager les erreurs calculées dans l'étape précédente à travers les couches du réseau de neurones à partir de la couche de sortie. Plus de détails sur cette opération de rétropropagation seront exposés dans la description de la figure 2b.

La figure 2b illustre un schéma du même couple de couches de neurones décrit dans la figure 2a mais pendant une opération de rétropropagation. La figure 2b sert à comprendre les mécanismes de base des calculs dans ce type de couches pendant une opération de rétropropagation d'erreurs lors de la phase d'apprentissage. Les données correspondent à des erreurs calculées, notées généralement $\delta_i$, qui sont rétro-propagées à partir des neurones de la couche $C_{k+1}$ de rang k+1 vers les neurones de la couche suivante $C_k$ de rang k. En partant dans le sens de rétropropagation « RETRO_PROP », lors d'une phase d'apprentissage, l'erreur $\delta_j^k$ associée au neurone $N_j^k$ de la couche $C_k$ est calculée par la formule suivante :

$$\delta_j^k = \sum_i \left(\delta_i^{k+1} . w_{ij}^{k+1}\right) . \partial S(x) / \partial x$$

avec $\partial S(x)/ \partial x$ la dérivée de la fonction d'activation qui est égale à 0 ou 1 dans le cas où on utilise une fonction ReLu.

L'étape de la mise à jour des coefficients synaptiques de tout le réseau de neurones en se basant sur les résultats des calculs précédents pour chaque neurone de chaque couche consiste à calculer pour chaque coefficient synaptique un facteur de mise à jour

$$\Delta W_{ij}^{(k)} = 1/N_{\text{batch}} * \sum_{Nbatch} X_i^{(k)} . \delta_j^{(k)}$$

avec $N_{\text{batch}}$ le nombre d'échantillons d'images utilisés pour l'apprentissage. A chaque itération de l'apprentissage, les coefficients synaptiques sont réécrits dans les moyens de stockage dédiés en appliquant le gradient calculé. Ainsi, pendant une opération d'apprentissage, le circuit calculateur réalise un grand nombre d'opérations d'écriture des coefficients synaptiques dans les moyens de stockage pour mettre à jours lesdits coefficients pour chaque neurone de chaque couche du réseau.

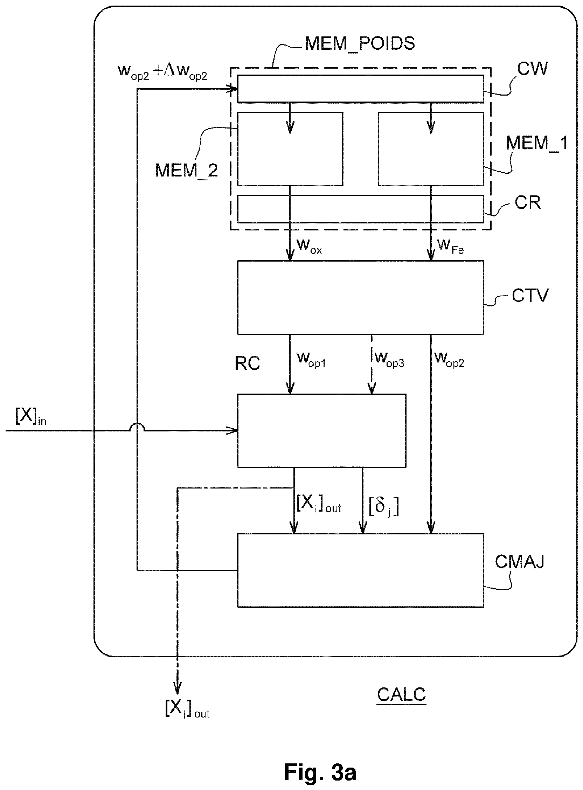

La figure 3a illustre un diagramme fonctionnel d'un calculateur CALC, selon un mode de réalisation de l'invention, le calculateur CALC étant configuré pour réaliser une opération d'apprentissage. Le calculateur de réseau de neurones CALC comprend un étage mémoire de coefficients synaptiques MEM_POIDS, un circuit de traitement de variables CTV, un réseau de calcul RC et un circuit de mise à jour des coefficients synaptiques CMAJ. Pendant une opération d'inférence, le calculateur CALC reçoit une matrice d'entrée $[X]_{in}$ comprenant une pluralité de données d'entrée $x_{i,j}$ et génère une matrice de sortie $[X]_{out}$ résultante des calculs de sommes pondérées détaillés précédemment.

L'étage comprend un premier ensemble de mémoires de poids MEM_1, un second ensemble de mémoires de poids MEM_2, un circuit de lecture CR des points mémoires du premier ou du second ensemble MEM1 et MEM2 et un circuit d'écriture CW dans les points mémoires du premier ou du second ensemble MEM1 et MEM2.

Le premier ensemble de mémoire MEM_1 est composé d'une pluralité de points mémoires réalisés selon une technologie non volatile et caractérisée par une forte endurance en lecture, et une basse énergie de lecture. Avantageusement, le premier ensemble de mémoire MEM_1 est réalisé par des mémoires résistives à base d'oxyde OxRAM qui présentent une endurance en lecture infinie et une énergie de lecture très basse de l'ordre de $10^{-14}$ J/bit. Les caractéristiques technologiques du premier ensemble de mémoire MEM_1 permettent d'améliorer la robustesse et la performance énergétique de l'étage mémoire des coefficients synaptiques MEM_POIDS pendant une opération d'inférence (grand nombre d'opérations de lecture des coefficients synaptiques).

Le second ensemble de mémoire MEM_2 est composé d'une pluralité de points mémoires réalisés selon une technologie caractérisée par une cyclabilité en écriture supérieure aux mémoires du premier groupe, et une énergie d'écriture inférieure. Avantageusement, le second ensemble de mémoire MEM_2 est réalisé par des mémoires à polarisation ferroélectrique FeRAM qui présentent une cyclabilité en écriture de l'ordre de $10^{14}$ cycles et une plus basse énergie d'écriture de l'ordre de $10^{-14}$ J/bit. Les caractéristiques technologiques du second ensemble de mémoire MEM_2 permettent d'améliorer la robustesse et la performance énergétique de l'étage mémoire des coefficients synaptiques MEM_POIDS pendant une opération d'apprentissage avec une mise à jour des coefficients synaptiques (grand nombre d'opérations d'écriture des coefficients synaptiques).

Plus généralement, les technologies des mémoires constituant le premier et le second ensemble sont choisies de manière que l'endurance en lecture du premier ensemble MEM_1 est supérieure à celle du second ensemble MEM_2 et de manière que la cyclabilité en écriture soit inférieure à la seconde cyclabilité en écriture pour améliorer la robustesse et la fiabilité des moyens de stockage des coefficients synaptiques d'un calculateur de réseau de neurones avec apprentissage. De plus, les technologies des mémoires constituant le premier et le second ensemble sont choisies de manière que l'énergie d'écriture du second ensemble MEM_2 est inférieure à celle du premier ensemble MEM_1 pour améliorer la performance énergétique des moyens de stockage des coefficients synaptiques d'un calculateur de réseau de neurones avec apprentissage. Cette amélioration simultanée de la robustesse et de la performance énergétique est obtenue en configurant le calculateur CALC pour exploiter d'une manière préférentielle un parmi le premier ou le second ensemble de mémoire selon l'opération exécutée par le calculateur (inférence ou apprentissage).

Dans cet exemple illustratif, et sans perte de généralité, le premier ensemble de mémoires MEM_1 est réalisé par un plan de mémoires résistives à base d'oxyde OxRAM et le second ensemble MEM_2 par un second plan de mémoires à polarisation ferroélectrique FeRAM.

Alternativement, il est possible d'intégrer les deux ensembles de mémoires dans le même plan de mémoires constituant un plan à technologie mixte. Les points mémoires FeRAM et les points mémoires OxRAM sont réalisés sur le même substrat semiconducteur et forment une seule matrice de mémoires.

D'une manière générale, chaque coefficient synaptique est codé sur un mot binaire w de bits de rang 1 à N+M arrangés par ordre croissant de poids, avec M et N deux entiers naturels non nuls. L'idée sous-jacente à l'invention est de décomposer chaque coefficient synaptique en deux parties : une première partie comprenant les bits de poids forts et une deuxième partie comprenant les bits de poids faibles. Les bits de poids faibles sont régulièrement modifiés lors de l'exécution de l'algorithme, et ainsi stockés dans l'ensemble des mémoires MEM_2 présentant une cyclabilité à l'écriture supérieure. À l'inverse, les bits de poids forts sont peu souvent modifiés et doivent être plus régulièrement lus lors de l'exécution de l'algorithme étant les bits prépondérants du coefficient synaptique. Ainsi, les bits de poids forts sont stockés dans l'ensemble des mémoires présentant une endurance en lecture supérieure.

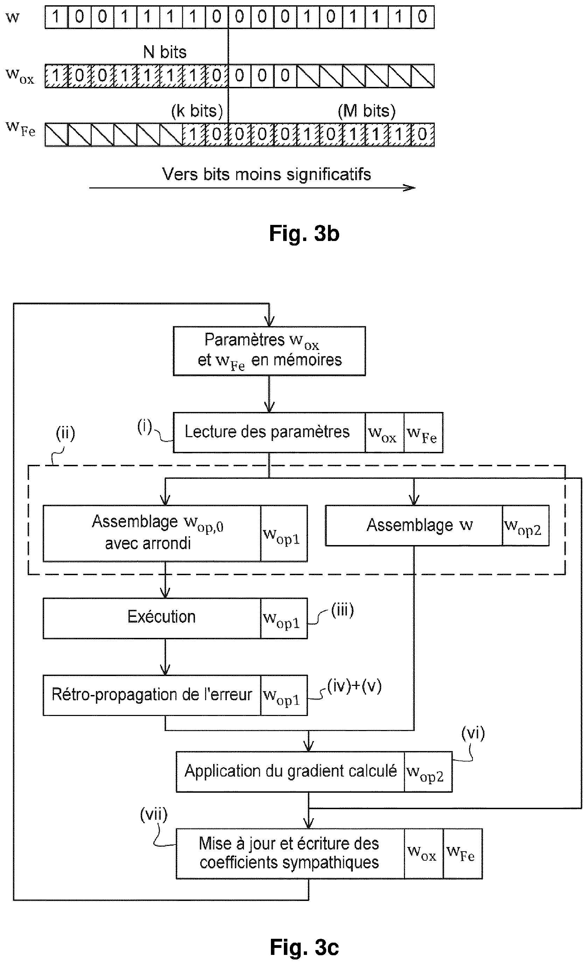

On décrit à présent un mode de réalisation détaillé de la décomposition du mot binaire d'un coefficient synaptique dans le contexte d'un réseau de neurones, à l'appui de la figure 3b.

Comme illustré à la figure 3b, chaque coefficient synaptique w est décomposé en deux sous-mots $w_{ox}$ et $w_{Fe}$. Chaque sous-mot est stocké dans l'un parmi le premier ou le second ensemble des mémoires MEM_1 et MEM_2 de manière à exploiter le type de mémoire le plus adapté selon l'opération exécutée (inférence ou apprentissage).

Le premier sous-mot $w_{ox}$ correspond aux bits de poids forts du coefficient synaptique w et est stocké dans le premier ensemble de mémoires MEM_1. Le second sous-mot $w_{Fe}$ correspond aux bits de poids faibles du coefficient synaptique w et est stocké dans le second ensemble de mémoires MEM_2.

Le circuit de traitement des variables CTV est configuré pour générer une variable opérationnelle ($w_{op1}$, $w_{op2}$ ou $w_{op3}$) qui est manipulée par le calculateur au cours des calculs et qui présente un niveau de précision configurable selon l'opération de calcul réalisée par le calculateur CALC choisie parmi l'inférence (lecture des w) ou l'apprentissage avec ses trois opérations de propagation (lecture intensive des w), rétropropagation (lecture des w) et mise à jour (écriture intensive des w). Il s'agit ainsi d'une variable opérationnelle correspondant à une valeur plus ou moins approximée du coefficient synaptique et utilisée par le calculateur CALC lors de l'exécution d'une phase l'algorithme.

Lors de la réalisation d'un algorithme de propagation ou de rétropropagation lors d'une phase d'apprentissage, les poids synaptiques ne sont pas modifiés et il n'est pas forcément nécessaire d'exploiter toute leur dynamique incluant les bits de poids faibles. Au contraire, seuls les poids forts peuvent suffire pour les calculs réalisés en fonction du niveau de précision recherché.

Le circuit de traitement des variables CTV génère ainsi une première variable opérationnelle $w_{op1}$ correspondant à une approximation du coefficient synaptique w. La première variable opérationnelle $w_{op1}$ joue le rôle d'opérande de pondération lors du calcul d'une somme pondérée par le calculateur CALC pendant l'apprentissage. Cela permet de réaliser les calculs de sommes pondérées en tenant compte principalement des bits de poids forts de manière à réduire le nombre d'opérations de lecture à partir du second ensemble de mémoires MEM_2.

Au contraire, pour la réalisation d'une opération de mise à jour des coefficients synaptiques lors d'un apprentissage, le calculateur CALC a besoin d'une précision élevée des coefficients synaptiques pour tenir compte des modifications récurrentes des bits de poids faibles. Le circuit de traitement des variables CTV génère ainsi une deuxième variable opérationnelle $w_{op2}$ correspondant à toute la dynamique du coefficient synaptique w. Une variation est appliquée sur la deuxième variable opérationnelle $w_{op2}$ aux termes d'une itération d'apprentissage. Cela permet de mettre à jour les coefficients synaptiques d'une manière précise en tenant en compte principalement des bits de poids faibles de manière à réduire le nombre d'opérations d'écriture dans le premier ensemble de mémoires MEM_1.

Pour la réalisation d'une phase d'inférence, le calculateur CALC n'a pas besoin d'une précision élevée des coefficients synaptiques. Le circuit de traitement des variables CTV génère ainsi une troisième variable opérationnelle $w_{op3}$ correspondant à une approximation du coefficient synaptique w. La troisième variable opérationnelle $w_{op3}$ joue le rôle d'opérande de pondération lors du calcul d'une somme pondérée par le calculateur CALC pendant l'inférence. Cela permet de réaliser les calculs de sommes pondérées en tenant compte principalement des bits de poids forts de manière à réduire le nombre d'opérations de lecture à partir du second ensemble de mémoires MEM_2.

Les variables opérationnelles sont générées à partir d'opérations d'assemblage, d'arrondi et/ou de troncature des sous-mots binaires $w_{ox}$ et $w_{Fe}$ des coefficients synaptiques distribués entre les deux ensembles de mémoires MEM_1 et MEM_2. On note qu'avant d'entamer la première itération d'apprentissage, les coefficients synaptiques sont initialisés à des valeurs aléatoires à titre d'exemple non limitatif. Il est envisageable de procéder aux opérations d'arrondi (ou troncature) à chaque itération d'apprentissage. Alternativement, il est possible de réaliser une seule opération d'arrondi (ou troncature) au passage de l'apprentissage à l'inférence à l'issue de la dernière itération d'apprentissage. Cela dépend du compromis cherché entre les contraintes matérielles et énergétiques subies par le calculateur et la précision du calcul.

Le réseau de calcul RC comprend une pluralité d'unités de calcul de type MAC (multiplieur-accumulateur) aptes à calculer des sommes des données d'entrée $x_i$ (ou des erreurs $\delta_j^k$ en rétropropagation) pondérées par l'une des variables opérationnelles ($w_{op1}$ ou $w_{op3}$) générés par le circuit de traitement des variables CTV selon l'opération réalisée par le calculateur CALC. De plus, le réseau de calcul RC reçoit la dérivée de la fonction de coût qui est calculée pour obtenir pour chaque neurone $N_i^K$ de la couche de sortie finale $C_K$ une erreur $\delta_i^K$. Les opérations de calcul de cette étape (fonction de coût + dérivation) sont réalisées par un microcontrôleur embarqué (non représenté) et différent du calculateur objet de l'invention.

Pendant une phase d'apprentissage, les unités de calcul du réseau de calcul RC reçoivent comme opérande de pondération, pour chaque coefficient synaptique, la première variable opérationnelle d'apprentissage $w_{op1}$ générée par le circuit de traitement de variables CTV.

Pendant une opération d'apprentissage, le circuit de mise à jour des coefficients synaptiques CMAJ est configuré pour calculer pour chaque coefficient synaptique un facteur de mise à jour $\Delta w_{op3}$ à partir des erreurs $\delta_i$ et de données xi calculées préalablement lors de la propagation et de la rétropropagation de l'apprentissage. Le gradient est appliqué à la seconde variable opérationnelle $w_{op2}$. Le résultat de la mise à jour $w_{op2+}$ $\Delta w_{op2}$ est ensuite écrit dans le second ensemble de mémoires MEM_2 via une boucle de rétroaction reliant le circuit de mise à jour CMAJ au circuit d'écriture CW de l'étage de mémoire MEM_POIDS.

Pendant une opération d'inférence, il n'y a pas de mise à jour des coefficients synaptiques et donc le circuit de mise à jour CMAJ n'est pas utilisé. Les unités de calcul du réseau de calcul RC reçoivent comme opérande de pondération, pour chaque coefficient synaptique, une troisième variable opérationnelle $w_{op3}$ générée par le circuit de traitement de variables CTV. La troisième variable opérationnelle $w_{op3}$ est représentée en pointillé car la figure 3a illustre la configuration du calculateur pendant une opération d'apprentissage.

La figure 3b illustre un exemple de sous-mots de stockage d'un coefficient synaptique w codé sur un mot binaire, distribués sur les deux ensembles de mémoires MEM_1 et MEM_2 du calculateur selon l'invention.

Nous rappelons que chaque coefficient synaptique w est codé sur un mot binaire w de bits de rang 1 à N+M arrangés par ordre croissant de poids, avec M et N deux entiers naturels non nuls.

Les N bits de poids forts du mot binaire forment un premier sous-mot de stockage du coefficient synaptique noté $w_{Ox}$. Il s'agit des bits de rang M+1 à M+N. Le premier sous-mot de stockage $w_{Ox}$ comprend des bits de poids forts qui ne sont pas modifiés régulièrement lors de l'opération d'apprentissage. En effet, la mise à jour des coefficients synaptiques est une opération à grande précision au cours de laquelle les modifications affectent rarement les bits de poids forts. Ainsi, dans le calculateur CALC selon l'invention, le premier sous-mot de stockage $w_{Ox}$ de chaque coefficient synaptique est stocké dans le premier ensemble de mémoires MEM_1 le mieux adapté pour des opérations de lecture intensives.

Les M+K bits de poids faibles du mot binaire w forment un second sous-mot de stockage du coefficient synaptique noté $w_{Fe}$. Il s'agit des bits de rang 1 à M+K. Le second sous-mot de stockage $w_{Fe}$ comprend des bits de poids faibles qui modifiés régulièrement lors de l'opération d'apprentissage. En effet, la mise à jour des coefficients synaptiques est une opération à grande précision au cours de laquelle les modifications affectent majoritairement les bits de poids faibles. Le second sous-mot de stockage $w_{Fe}$ de chaque coefficient synaptique dans le second ensemble de mémoires MEM_2 le mieux adapté pour des opérations d'écriture intensives.

De plus, les K bits de poids forts du second sous-mot de stockage $w_{Fe}$ constituent des bits d'intersection répétés entre le premier sous mot $w_{Fe}$ et le second sous-mot $w_{Ox}$, avec K un entier naturel inférieur ou égal à N. Il s'agit des bits de rang M+1 à M+K qui représentent une répétition des bits de même poids du premier sous-mot de stockage $w_{Ox}$ mais stocké en outre dans le second ensemble de mémoires MEM_2. Cette intersection est le lien entre les bits du premier sous-mot de stockage $w_{Ox}$ figés pendant l'apprentissage et les bits du second sous-mot de stockage $w_{Fe}$ régulièrement modifiés pendant l'apprentissage. Lors du passage de l'apprentissage à l'inférence, le contenu des K bits de l'intersection est recopié à partir du second sous-mot de stockage $w_{Fe}$ dans les bits de même poids du premier sous-mot de stockage $w_{Ox}$ dans le premier ensemble de mémoires MEM_1.

La figure 3c illustre les étapes d'un procédé d'apprentissage mis en oeuvre par le calculateur de réseau de neurones CALC selon l'invention.

La première étape (i) consiste à lire, pour chaque coefficient synaptique $w_{i,j}$ : le premier sous-mot de stockage $w_{ox}$ à partir du premier ensemble de mémoires de poids MEM_1 et lire le second sous-mot de stockage $w_{Fe}$ à partir d'un second ensemble de mémoires de poids MEM_2. Cette étape est mise en oeuvre par le circuit de lecture CR commandé par des moyens de contrôle.

La deuxième étape (ii) consiste à générer la première variable opérationnelle $w_{op1}$ et la deuxième variable opérationnelle $w_{op2}$ à partir des premiers et second sous-mots dudit coefficient synaptique w.

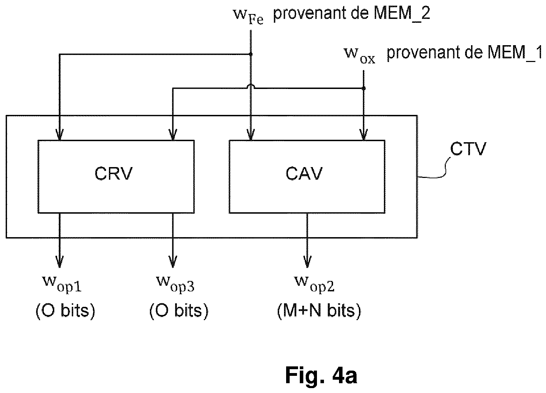

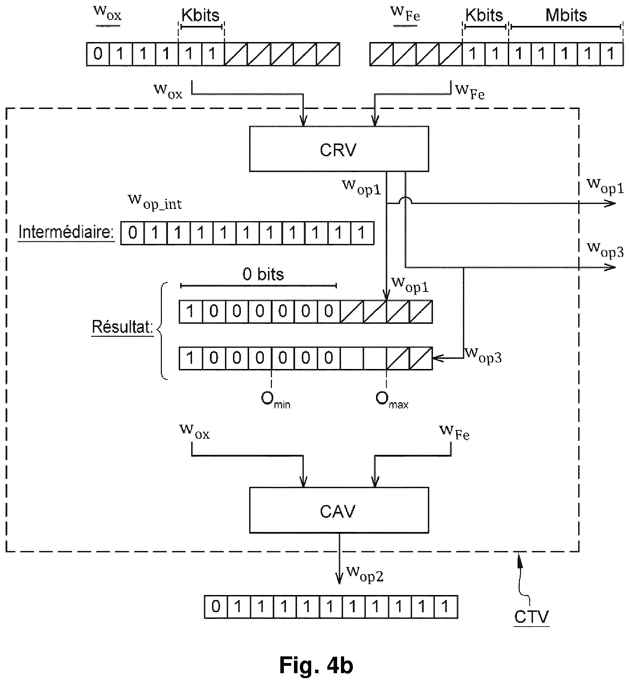

Pour détailler le déroulement de la deuxième étape (ii), nous illustrons respectivement dans les figures 4a et 4b un diagramme fonctionnel du circuit de traitement des variables CTV et le mécanisme de génération de la première variable opérationnelle $w_{op1}$ composée de O bits avec O un entier naturel inférieur à M+N et de la deuxième variable opérationnelle $w_{op2}$ composée de M+N bits.

Sur la figure 4a, le circuit de traitement de variables CTV comprend un circuit réducteur de variable CRV pour calculer la première variable opérationnelle $w_{op1}$ à partir du premier et du second sous-mot de stockage ($w_{Fe}$ et $w_{Ox}$) en réalisant des opérations d'arrondi ou de troncature. Le circuit de traitement des variables CTV comprend en outre un circuit d'assemblage CAV apte à concaténer des sous-mots afin de générer des variables opérationnelles utilisées dans les différentes phases de fonctionnement du réseau de neurone. Le circuit d'assemblage CAV est configuré pour calculer la seconde variable opérationnelle $w_{op2}$ à partir du premier et du second sous-mot de stockage $w_{Fe}$ et $w_{Ox}$.

Sur la figure 4b, le circuit réducteur de variable CRV reçoit à chaque itération le premier sous-mot de stockage $w_{ox}$ de N bits provenant du premier ensemble de mémoires MEM_1 et le second sous-mot de stockage $w_{Fe}$ de M+K bits provenant du second ensemble de mémoires MEM_2 pour calculer une variable intermédiaire $w_{op\_int}$ codés sur M+N bits. La variable intermédiaire $w_{op\_int}$ est obtenue par la concaténation des deux sous-mots reçus avec la prépondérance du second sous-mot de stockage $w_{Fe}$ pour les bits d'intersection. Ensuite, le circuit réducteur de variable CRV génère la première variable opérationnelle $w_{op1}$ correspondant à l'arrondi (ou la troncature) de la variable intermédiaire $w_{op\_int}$ sur les O bits de poids forts. On obtient ainsi une variable opérationnelle d'approximation du coefficient synaptique utilisable pour la propagation et la rétropropagation à travers le réseau de neurones pendant une itération d'apprentissage.

De plus, pour chaque itération d'apprentissage, la seconde variable opérationnelle $w_{op2}$ est générée par le circuit d'assemblage CAV sur M+N bits et obtenue par la concaténation des N-K bits du premier sous-mot de stockage $w_{Ox}$ provenant du premier ensemble de mémoires MEM_1 avec les M+K bits du second sous-mot de stockage $w_{Fe}$ provenant du second ensemble de mémoires MEM_2. On obtient ainsi une variable opérationnelle à un niveau de précision supérieur à $w_{op1}$ du coefficient synaptique utilisable pour la phase de mise à jour à la fin de l'itération d'apprentissage.

La troisième étape (iii) consiste à effectuer une propagation de données d'un échantillon $x_{i,j}$, à travers le réseau de neurones, pondérés par les premières variables opérationnelles $w_{op1}$. Les unités de calcul du réseau de calcul RC reçoivent comme opérande de pondération, pour chaque coefficient synaptique, la première variable opérationnelle $w_{op1}$ généré par le circuit de traitement de variables CTV.

La quatrième étape (iv) consiste à calculer des erreurs δ à la sortie de la dernière couche de neurones comme expliqué précédemment.

La cinquième étape (v) consiste à effectuer une rétropropagation des erreurs $δ_i$, à travers le réseau de neurones, pondérés par les premières variables opérationnelles $w_{op1}$ et calculer un gradient pour chaque première variable opérationnelle $w_{op1}$ suite à une rétropropagation d'erreurs. Les unités de calcul du réseau de calcul RC reçoivent comme opérande de pondération, pour chaque coefficient synaptique, la première variable opérationnelle $w_{op1}$ généré par le circuit de traitement de variables CTV.

La sixième étape (vi) consiste à appliquer à chaque deuxième variable opérationnelle $w_{op2}$ un gradient d'erreur résultant de l'étape de rétropropagation. Cette étape est mise en oeuvre par le circuit de mise à jour des coefficients synaptiques. L'application du gradient $Δw_{op2}$ permet d'appliquer les modifications sur des bits de poids faible et donc obtenir une précision maximale pendant la mise à jour.

La dernière étape (vii) consiste à mettre à jour pour chaque coefficient synaptique le second sous-mot de stockage $w_{Fe}$ dans le second ensemble de mémoires de poids MEM_2 via la boucle de rétroaction reliant le circuit de mise à jour CMAJ au circuit d'écriture CW.

La séquence des étapes précitées est répétée pour chaque échantillon d'entrée d'apprentissage plusieurs fois jusqu'à converger à un point d'équilibre. À chaque itération les mémoires du second ensemble MEM_2 sont les seules à être réécrites pendant l'étape de mise à jour. Cela permet de profiter de la haute cyclabilité en écriture des mémoires de type FeRAM par exemple et de minimiser l'usure des mémoires de type OxRAM par exemple en réduisant au maximum le nombre d'écriture de ce type de mémoire. De plus, la faible énergie d'écriture des mémoires de second ensemble MEM_2 permet de réduire la consommation énergétique lors de l'apprentissage et plus particulièrement lors de la mise à jour des poids synaptiques.

Alternativement, la dernière étape (vii) comprend en outre des opérations d'écriture dans les bits de poids faibles du premier sous-mot de stockage $w_{Ox}$ dans le premier ensemble de mémoires de poids MEM_1 si l'application du gradient $Δw_{op2}$ dans l'étape précédente (vi) modifie au moins un bit d'un ordre supérieur à N+K.

Nous allons décrire dans ce qui suit l'opération intermédiaire de passage de l'apprentissage à l'inférence pour exploiter le calculateur de réseau de neurones ayant finalisé son apprentissage. On représente l'état des sous-mots

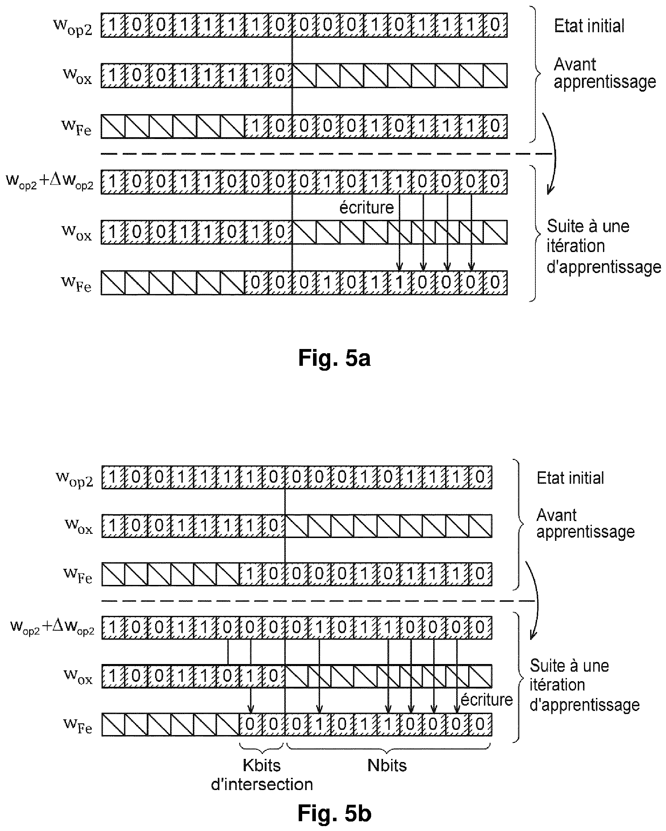

La figure 5a décrit un premier exemple de la mise à jour des sous-mots d'un coefficient synaptique dans les deux ensembles de mémoires à la fin d'une itération d'apprentissage. Il s'agit de l'étape intermédiaire entre la dernière itération d'apprentissage et le démarrage de l'inférence ou d'une étape intermédiaire entre deux itérations d'apprentissage successives.

Les modifications faites sur les coefficients synaptiques du réseau sont de petite amplitude, et seuls les bits les moins significatifs de $w_{Fe}$ sont réécrits après N itérations d'apprentissage. Les bits de poids forts de la variable opérationnelle $w_{op2}$ ne sont pas modifiées suite à la phase d'apprentissage ainsi aucune écriture n'est réalisée sur les M bits de poids forts de MEM_1 ni sur les K bits d'intersection dans le second ensemble de mémoires MEM_2.

La figure 5b décrit un second exemple de la mise à jour des sous-mots d'un coefficient synaptique dans les deux ensembles de mémoires à la fin d'une itération d'apprentissage. Il s'agit de l'étape intermédiaire entre la dernière itération d'apprentissage et le démarrage de l'inférence ou d'une étape intermédiaire entre deux itérations d'apprentissage successives.

Dans le second cas, l'amplitude des modifications des bits les moins significatifs de $w_{Fe}$ pendant l'apprentissage, modifie les K bits d'intersection dans le second ensemble de mémoire MEM_2. Lors des opérations de mise à jour pour chaque itération, seuls les K bits d'intersection stockés dans le second ensemble des mémoires MEM_2 (donc de $w_{Fe}$) sont réécrits. Les K bits d'intersection du premier sous-mot de stockage $w_{Ox}$ restent inchangés pendant la phase d'apprentissage.

À la fin du procédé d'apprentissage et lors du passage de l'apprentissage vers l'inférence, nous observons qu'il y a une contradiction entre les K premiers bits du premier sous-mot de stockage $w_{Ox}$ (non modifiés lors de la mise à jour) et les K bits du second sous-mot de stockage $w_{Fe}$ (modifiés lors de la mise à jour) pour les mêmes bits du coefficient synaptique. Dans ce cas, le circuit d'écriture CW est configuré pour copier les K bits modifiés du second sous-mot de stockage $w_{Fe}$ dans le premier ensemble des mémoires MEM_1 comprenant le premier sous-mot de stockage $w_{Ox}$. Ainsi, le nombre d'écriture dans le premier sous-mot de stockage $w_{Ox}$ est minimisé car on lors des itérations d'apprentissage, la probabilité de réécriture est supérieure pour les bits stockés dans le second ensemble des mémoires MEM_2. Cela évite l'usure des mémoires du premier ensemble MEM_1 présentant une cyclabilité en écriture inférieure à celle des mémoires du second ensemble MEM_2.

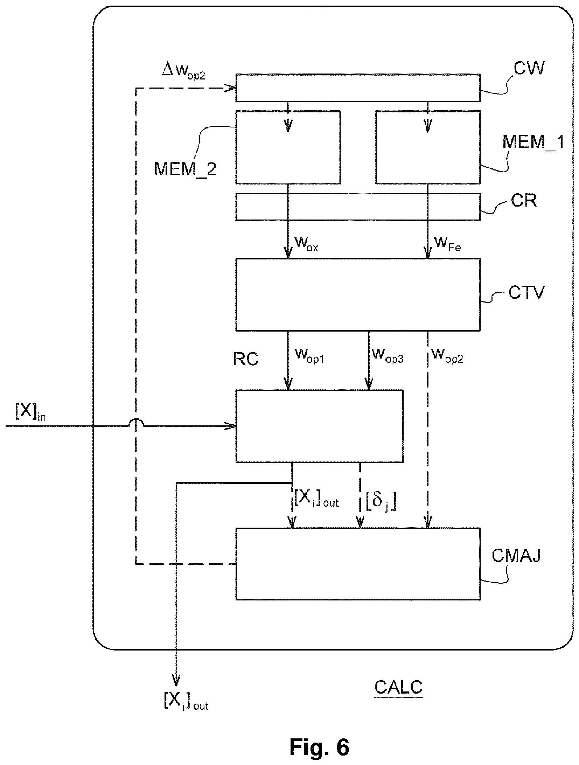

La figure 6 illustre un diagramme fonctionnel d'un calculateur CALC configuré pour réaliser une opération d'inférence, selon un mode de réalisation de l'invention. On observe ainsi la configuration du flux des données dans le calculateur CALC tel que les unités de calcul du réseau de calcul RC reçoivent comme opérande de pondération, pour chaque coefficient synaptique, la troisième variable opérationnelle $w_{op3}$ généré par le circuit de traitement de variables CTV comme illustré dans la figure 4b.

La troisième variable opérationnelle $w_{op3}$ comprend les O bits de poids forts du coefficient synaptique w et donc comprend au moins une partie du premier sous-mot de stockage $w_{Ox}$ et donc des données lues exclusivement à partir du premier ensemble de mémoires MEM_1.

Dans le cas où la taille de la troisième variable opérationnelle $w_{op3}$, est choisie tel que O<N, on minimise les opérations de lecture et on réalise des lectures exclusivement à partir du premier ensemble de mémoires MEM_1. Il s'agit de la configuration la plus avantageuse en matière de robustesse technique (durée de vie des moyens de stockage) et de consommation énergétique. Cependant, il y a une perte de précision lors de l'inférence car la taille de la troisième variable opérationnelle $w_{op3}$ est limitée.

Dans le cas où la taille de la troisième variable opérationnelle d'inférence $w_{op3}$, est choisie tel que O>N, on réalise des lectures sur toutes les mémoires du premier ensemble de mémoires MEM_1 mais aussi dans une partie des données à partir des mémoires du second ensemble de mémoires MEM_2. Il s'agit de la configuration la plus avantageuse en matière de performance calculatoire et de précision. Cependant, cette configuration est moins avantageuse que la configuration précédente en matière de robustesse technique et de consommation énergétique.

De cette manière, Il est possible d'augmenter la précision des coefficients synaptiques pour une inférence critique pour avoir de meilleurs résultats. Pour que cela soit efficace, il faudrait dans un premier temps faire une passe d'apprentissage en faible précision $O_{min}$. Une fois cet apprentissage terminé, il faut faire une passe d'entrainement à précision $O_{max}$ plus élevée tout en figeant les bits $O_{faible}$. De cette manière, le réseau utilisant $O_{min}$ bits a toujours les mêmes performances. Le réseau utilisant $O_{max}$ bits peut chercher à affiner dans cette limite.

Avantageusement, la taille de la troisième variable opérationnelle $w_{op3}$, est choisie telle que O=N de manière à utiliser tous les bits stockés dans les mémoires à forte endurance en lecture. Il s'agit d'une configuration optimale avec un compromis entre la précision du calcul pendant une inférence et l'amélioration de la robustesse technique des moyens de stockage pendant l'apprentissage.

Nous allons présenter dans ce qui suit des variantes de conception du calculateur selon l'invention selon le choix du nombre des bits d'intersection K entre le premier sous-mot de stockage $w_{Ox}$ et le second sous-mot de stockage $w_{Fe}$.

Dans le cas où K=0, il n'y a pas de bits répétés entre les mots $w_{Ox}$ et $w_{Fe}$. Cette variante offre l'avantage de minimiser la surface du second ensemble de mémoires MEM_2. Aucun des bits d'un coefficient synaptique n'est répété il s'agit de la configuration qui offre une réduction de la surface du calculateur. D'un autre côté, ladite configuration demande plus d'opérations d'écriture sur les mémoires du premier ensemble MEM_1 lors de l'apprentissage.

Dans le cas où K=N, les bits stockés dans $w_{Ox}$ sont entièrement répétés dans $w_{Fe}$. Cette variante offre l'avantage de n'avoir besoin d'aucune écriture OxRAM pendant les cycles d'une phase d'apprentissage. D'un autre côté, cette variante demande une surface plus grande pour second ensemble de mémoires MEM_2. Cet ensemble de mémoire n'est plus utilisé durant l'inférence et on se retrouve avec une importante surface du circuit inactive pendant la durée de vie du calculateur.

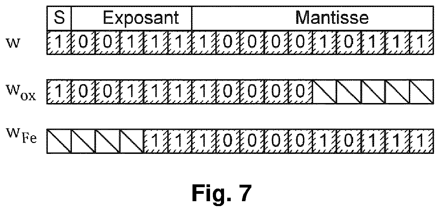

La figure 7 illustre des sous-mots d'un coefficient synaptique en format « virgule flottante » distribués sur les deux ensembles de mémoires du calculateur selon l'invention.

Sans perte de généralité, le circuit calculateur CALC selon l'invention est compatible en outre avec un codage des coefficients synaptique sous format « virgule flottante ». Dans ce cas, le mot binaire comprend une mantisse, un exposant et un signe. L'ensemble des bits de la mantisse présentent une forte variabilité pendant l'apprentissage. L'ensemble des bits de signe et d'exposant subissent beaucoup moins de modifications pendant l'apprentissage. Ainsi, dans le contexte de l'invention il est envisageable de distribuer le mot binaire de chaque coefficient synaptique de la manière suivante :

- un premier sous-mot de stockage $w_{Ox}$ dans le premier ensemble de mémoire MEM_1 comprenant au moins les bits de l'exposant et du signe ;

- un second sous-mot de stockage du coefficient synaptique $w_{Fe}$ dans le second ensemble de mémoire MEM_2 comprenant au moins la mantisse.

L'ensemble des caractéristiques et des traitements de données préalablement détaillés restent valables pour le mode de réalisation avec un codage sous format virgule flottante.

Bien que l'invention ait été décrite dans le contexte d'application à un calculateur pour réseau de neurones, elle s'applique à l'identique pour tout calculateur implémentant un algorithme de calcul comportant au moins deux phases de calcul impliquant respectivement beaucoup et peu de modifications des valeurs des opérandes manipulées au cours des calculs.

**Revendications**

1. Calculateur (CALC) pour exécuter un algorithme de calcul impliquant une variable numérique (w) selon au moins deux phases de fonctionnement,

    la première phase de fonctionnement comprenant une pluralité d'itérations d'une première opération d'exploitation de la variable numérique ;

que et d'une opération de mise à jour de la variable numérique ;
la seconde phase de fonctionnement comprenant une seconde opération d'exploitation de la variable numérique ;
chaque variable numérique étant décomposée en un premier sous-mot binaire ($w_{ox}$) composé des bits de poids forts de la variable et un second sous-mot binaire ($w_{Fe}$) composé des bits de poids faibles de la variable, le calculateur (CALC) comprenant :

    - un étage mémoire (MEM_POIDS) comprenant :

        ◦ un premier ensemble de mémoires (MEM_1) pour stocker le premier sous-mot ($w_{ox}$) de chaque variable numérique (w); chaque mémoire dudit premier ensemble (MEM_1) étant non volatile et présentant une première endurance en lecture et une première cyclabilité en écriture ;
        ◦ un second ensemble de mémoires (MEM_2) pour stocker le second sous-mot ($w_{Fe}$) de chaque variable numérique (w); chaque mémoire dudit second ensemble présentant une seconde endurance en lecture et une seconde cyclabilité en écriture ;

    - un circuit de traitement de variables (CTV) configuré pour générer pour chaque variable numérique (w) au moins une variable opérationnelle ($w_{op1}$, $w_{op2}$, $w_{op3}$) approximée de la variable numérique à partir du premier et du second sous-mot ($w_{ox}$, $w_{Fe}$) selon la phase de fonctionnement choisie ;
    - un réseau de calcul (RC) pour implémenter des opérations de calcul ayant pour opérande l'au moins une variable opérationnelle ($w_{op1}$, $w_{op2}$, $w_{op3}$) selon la phase de fonctionnement choisie ;

la première endurance en lecture étant supérieure à la seconde endurance en lecture et la première cyclabilité en écriture étant inférieure à la seconde cyclabilité en écriture.

2. Calculateur (CALC) selon la revendication 1 dans lequel

    le premier sous-mot comprend N bits, le second sous-mot comprend M+K bits, avec M et N deux entiers naturels non nuls et K un entier naturel ; et dans lequel les K bits de poids forts du second sous-mot ($w_{Fe}$) présentent une intersection de même poids avec le premier sous-mot ($w_{Ox}$)

étant répétés dans le premier et le second ensemble de mémoires de poids (MEM_2, MEM_1),
le circuit de traitement de variables (CTV) comprenant :

- Un circuit réducteur de variables (CRV) pour générer au moins une première variable opérationnelle ($w_{op1}$, $w_{op3}$) de O bits avec O un entier naturel non nul inférieur à M+N ; ladite une première variable opérationnelle ($w_{op1}$) correspondant à l'arrondi ou la troncature du second sous-mot ($w_{Fe}$) concaténé avec les N-K bits de poids forts du premier sous-mot ($w_{Ox}$) ;

3. Calculateur (CALC) selon la revendication 2 dans lequel le circuit de traitement de variables (CTV) comprend en outre un circuit d'assemblage (CAV) configuré pour générer une deuxième variable opérationnelle ($w_{op2}$) de M+N bits en concaténant, pour chaque variable numérique (w), le second sous-mot ($w_{Fe}$) avec les N-K bits de poids forts du premier sous-mot ($w_{Ox}$) lors de l'exécution de l'opération de mise à jour de la variable numérique.

4. Calculateur (CALC) selon la revendication 3 comprenant en outre un circuit de mise à jour (CMAJ) configuré pour réaliser les étapes suivantes pour chaque variable numérique (w) pour chaque itération de la première phase de fonctionnement, pendant l'opération de mise à jour de la variable numérique,

- calculer un gradient pour la première variable opérationnelle ($w_{op1}$)
- et appliquer ledit gradient à la deuxième variable opérationnelle ($w_{op2}$).
- mettre à jour le second sous-mot ($w_{Fe}$) dans le second ensemble de mémoires de poids (MEM_2) en copiant les bits de même poids de la deuxième variable opérationnelle ($w_{op2}$) suite à l'application du gradient.

5. Calculateur (CALC) selon la revendication précédente dans lequel suite à la dernière itération de la première phase de fonctionnement, le circuit de mise à jour (CMAJ) est configuré pour réaliser l'étape suivante pour chaque variable numérique :

- mettre à jour les K bits d'intersection dans le premier sous-mot ($w_{Ox}$) en recopiant les K bits de même poids préalablement mis à jour à partir du second sous-mot ($w_{Fe}$).

6. Calculateur (CALC) selon l'une quelconques des revendications 2 à 5 dans lequel lors de la seconde opération d'exploitation, pour chaque variable numérique :

- le circuit de traitement de variables (CTV) est configuré pour générer une troisième variable opérationnelle ($w_{op3}$) comprenant au moins le sous-mot (wax) ;
- le réseau de calcul (RC) reçoit comme opérande la troisième variable opérationnelle ($w_{op3}$).

7. Calculateur (CALC) selon la revendication précédente dans lequel la troisième variable opérationnelle ($w_{op3}$) comprend en outre au moins une partie du second sous-mot ($w_{Fe}$).

8. Calculateur (CALC) selon l'une quelconque des revendications précédentes dans lequel la variable numérique (w) est sous format virgule flottante comprenant une mantisse, un exposant et un signe ; et dans lequel le premier sous-mot ($w_{Ox}$) comprend au moins l'exposant et le signe ; le second sous-mot ($w_{Fe}$) comprend au moins la mantisse.

9. Calculateur (CALC) selon l'une quelconque des revendications précédentes dans lequel le premier ensemble de mémoires (MEM_1) est une pluralité de mémoires résistives à base d'oxyde OxRAM.

10. Calculateur (CALC) selon l'une quelconque des revendications précédentes dans lequel le second ensemble de mémoires (MEM_2) est une pluralité de mémoires à polarisation ferroélectrique FeRAM.

11. Calculateur (CALC) selon la revendication 10 en combinaison avec la revendication 9 dans lequel les mémoires à polarisation ferroélectrique FeRAM et les mémoires résistives à base d'oxyde OxRAM sont réalisées sur le même substrat semiconducteur.

12. Calculateur (CALC) selon l'une quelconque des revendications précédentes configuré pour mettre en oeuvre un réseau de neurones artificiels, le réseau de neurones étant composé d'une succession de couches ($C_k$, $C_{k+1}$) étant chacune constituée d'un ensemble de neurones, chaque couche étant associée à un ensemble de coefficients synaptiques ($w_{i,j}$); dans lequel :

- les variables numériques sont les coefficients synaptiques du réseau de neurones ;
- la première phase de fonctionnement est une phase d'apprentissage ;
- la seconde phase de fonctionnement est une phase d'inférence ;
- la première opération d'exploitation des variables numériques est une propagation des données d'entrée ($w_{i,j}$) d'apprentissage ou rétropropagation des erreurs ($\delta$). d'apprentissage ;
- la seconde opération d'exploitation est une propagation des données d'entrée d'inférence ;
- le réseau de calcul (RC) est apte à calculer des sommes pondérées par variable opérationnelle ($w_{op1}$, $w_{op2}$, $w_{op3}$).

**Patentansprüche**

1. Rechner (CALC) zum Ausführen eines eine numerische Variable (w) implizierenden Rechenalgorithmus in mindestens zwei Betriebsphasen,

   wobei die erste Betriebsphase eine Vielzahl von Iterationen eines ersten Vorgangs zum Auswerten der numerischen Variablen und eines Vorgangs zum Aktualisieren der numerischen Variablen umfasst;
   wobei die zweite Betriebsphase einen zweiten Vorgang zum Auswerten der numerischen Variablen umfasst;
   wobei jede numerische Variable in ein aus den höchstwertigen Bits der Variablen bestehendes erstes binäres Teilwort ($w_{ox}$) und ein aus den niedrigstwertigen Bits der Variablen bestehendes zweites binäres Teilwort ($w_{Fe}$) zerlegt wird, wobei der Rechner (CALC) Folgendes umfasst:

      - eine Speicherstufe (MEM_POIDS), die Folgendes umfasst:

         ○ einen ersten Satz von Speichern (MEM_1) zum Speichern des ersten Teilworts ($w_{ox}$) jeder numerischen Variablen (w); wobei jeder Speicher des ersten Satzes (MEM_1) nichtflüchtig ist und eine erste Lesedauer und eine erste Schreibzyklisierbarkeit aufweist;
         ○ einen zweiten Satz von Speichern (MEM_2) zum Speichern des zweiten Teilworts ($w_{Fe}$) jeder numerischen Variablen (w); wobei jeder Speicher des zweiten Satzes eine zweite Lesedauer und eine zweite Schreibzyklisierbarkeit aufweist;

      - eine Variablenverarbeitungsschaltung (CTV), die zum Erzeugen, für jede numerische Variable (w), mindestens einer der numerischen Variablen aus dem ersten und dem zweiten Teilwort ($w_{ox}$, $w_{Fe}$) gemäß der gewählten Betriebsphase angenäherten Betriebsvariablen ($w_{op1}$, $w_{op2}$, $w_{op3}$) konfiguriert ist;
      - ein Rechennetzwerk (RC) zum Implementieren von Rechenvorgängen, die als Operanden die mindestens eine Betriebsvariable ($w_{op1}$, $w_{op2}$, $w_{op3}$) gemäß der gewählten Betriebsphase haben;

   wobei die erste Lesedauer größer als die zweite Lesedauer ist und die erste Schreibzyklisierbarkeit kleiner als die zweite Schreibzyklisierbarkeit ist.

2. Rechner (CALC) nach Anspruch 1, wobei das erste Teilwort N Bits umfasst, das zweite Teilwort M+K Bits umfasst, wobei M und N zwei ganze natürliche Zahlen ungleich Null sind und K eine natürliche Zahl ist;

   und wobei die K höchstwertigen Bits des zweiten Teilworts ($w_{Fe}$) eine gleichwertige Überschneidung mit dem ersten Teilwort ($w_{Ox}$) aufweisen und im ersten und im zweiten Satz von Wertigkeitsspeichern (MEM_2, MEM_1) wiederholt werden,
   wobei die Variablenverarbeitungsschaltung (CTV) Folgendes umfasst:

      - eine Variablenreduktionsschaltung (CRV) zum Erzeugen mindestens einer ersten Betriebsvariablen ($w_{op1}$, $w_{op3}$) mit O Bits, wobei O eine natürliche ganze Zahl ungleich Null ist, die kleiner als M+N ist; wobei die eine erste Betriebsvariable ($w_{op1}$) der Rundung oder Trunkierung des zweiten Teilworts ($w_{Fe}$) entspricht, das mit den N-K höchstwertigen Bits des ersten Teilworts ($w_{Ox}$) verkettet ist.

3. Rechner (CALC) nach Anspruch 2, wobei die Variablenverarbeitungsschaltung (CTV) ferner eine Zusammensetzungsschaltung (CAV) umfasst, die zum Erzeugen einer zweiten Betriebsvariablen ($w_{op2}$) mit M+N Bits durch Verketten, für jede numerische Variable (w), des zweiten Teilworts ($w_{Fe}$) mit den N-K höchstwertigen Bits des ersten Teilworts ($w_{Ox}$) bei der Ausführung des Aktualisierungsvorgangs der numerischen Variable konfiguriert ist.

4. Rechner (CALC) nach Anspruch 3, der ferner eine Aktualisierungsschaltung (CMAJ) umfasst, die zum Durchführen der folgenden Schritte für jede numerische Variable (w) für jede Iteration der ersten Betriebsphase während des Aktualisierungsvorgangs der numerischen Variablen konfiguriert ist:

      - Berechnen eines Gradienten für die erste Betriebsvariable ($w_{op1}$)
      - und Anwenden des Gradienten auf die zweite Betriebsvariable ($w_{op2}$),
      - Aktualisieren des zweiten Teilworts ($w_{Fe}$) im zweiten Satz von Wertigkeitsspeichern (MEM_2) durch Kopieren der gleichwertigen Bits der zweiten Betriebsvariablen ($w_{op2}$) infolge der Anwendung des Gradienten.

**5.** Rechner (CALC) nach dem vorherigen Anspruch, wobei nach der letzten Iteration der ersten Betriebsphase die Aktualisierungsschaltung (CMAJ) zum Durchführen des folgenden Schritts für jede numerische Variable konfiguriert ist:

- Aktualisieren der K Schnittbits im ersten Teilwort ($w_{Ox}$) durch Kopieren der K gleichwertigen Bits, die zuvor aus dem zweiten Teilwort ($w_{Fe}$) aktualisiert wurden.

**6.** Rechner (CALC) nach einem der Ansprüche 2 bis 5, wobei während des zweiten Auswertungsvorgangs für jede numerische Variable:

- die Variablenverarbeitungsschaltung (CTV) zum Erzeugen einer dritten Betriebsvariablen ($w_{op3}$) konfiguriert ist, die mindestens das Teilwort ($w_{Ox}$) umfasst;
- das Rechennetzwerk (RC) als Operand die dritte Betriebsvariable ($w_{op3}$) erhält.

**7.** Rechner (CALC) nach dem vorherigen Anspruch, wobei die dritte Betriebsvariable ($w_{op3}$) ferner mindestens einen Teil des zweiten Teilworts ($w_{Fe}$) umfasst.

**8.** Rechner (CALC) nach einem der vorherigen Ansprüche, wobei die numerische Variable (w) im Gleitkommaformat vorliegt, das eine Mantisse, einen Exponenten und ein Vorzeichen umfasst; und wobei das erste Teilwort ($w_{Ox}$) mindestens den Exponenten und das Vorzeichen umfasst; das zweite Teilwort ($w_{Fe}$) mindestens die Mantisse umfasst.

**9.** Rechner (CALC) nach einem der vorherigen Ansprüche, wobei der erste Satz von Speichern (MEM_1) eine Vielzahl von Oxid-Widerstandsspeichern Ox-RAM ist.

**10.** Rechner (CALC) nach einem der vorherigen Ansprüche, wobei der zweite Satz von Speichern (MEM_2) eine Vielzahl von ferroelektrischen Polarisationsspeichern FeRAM ist.

**11.** Rechner (CALC) nach Anspruch 10 in Verbindung mit Anspruch 9, wobei die ferroelektrisch polarisierten Speicher FeRAM und die Oxid-Widerstandsspeicher OxRAM auf demselben Halbleitersubstrat hergestellt sind.

**12.** Rechner (CALC) nach einem der vorherigen Ansprüche, der zum Implementieren eines künstlichen neuronalen Netzwerks konfiguriert ist, wobei das neuronale Netzwerk aus einer Folge von Schichten ($C_k$, $C_{k+1}$) besteht, die jeweils aus einem Satz von Neuronen bestehen, wobei jede Schicht mit einem Satz von synaptischen Koeffizienten ($w_{i,j}$) assoziiert ist;

wobei:

- die numerischen Variablen die synaptischen Koeffizienten des neuronalen Netzwerks sind;
- die erste Betriebsphase eine Lernphase ist;
- die zweite Betriebsphase eine Inferenzphase ist;
- der erste Auswertungsvorgang der numerischen Variablen eine Propagierung der Lerneingangsdaten ($w_{i,j}$) oder die Rückpropagierung der Lernfehler ($\delta$) ist;
- der zweite Auswertungsvorgang eine Propagierung der Inferenzeingabedaten ist;
- das Rechennetzwerk (RC) gewichtete Summen pro Betriebsvariable ($w_{op1}$, $w_{op2}$, $w_{op3}$) berechnen kann.

**Claims**

**1.** A computer (CALC) for executing a computation algorithm involving a digital variable (w) in accordance with at least two operating phases,

the first operating phase comprising a plurality of iterations of a first operation for using the digital variable and an operation for updating the digital variable;
the second operating phase comprising a second operation for using the digital variable;
with each digital variable being divided into a first binary sub-word ($w_{ox}$) made up of the most significant bits of the variable and a second binary sub-word ($w_{Fe}$) made up of the least significant bits of the variable, the computer (CALC) comprising:

- a memory stage (MEM_POIDS) comprising:

  ○ a first set of memories (MEM_1) for storing the first sub-word ($w_{ox}$) of each digital variable (w), with each memory of said first set (MEM_1) being non-volatile and having a first read endurance and a first write cyclability;
  ○ a second set of memories (MEM _2) for storing the second sub-word ($w_{Fe}$) of each digital variable (w), with each memory of said second set having a second read endurance and a second write cyclability;

- a variable processing circuit (CTV) configured to generate, for each digital variable (w), at least one approximated operational variable ($w_{op1}$, $w_{op2}$, $w_{op3}$) of the digital variable based on the first and the second sub-

word ($w_{ox}$, $w_{Fe}$) according to the selected operating phase;
- a computation network (RC) for implementing computation operations having the at least one operational variable ($w_{op1}$, $w_{op2}$, $w_{op3}$) as an operand according to the selected operating phase;

with the first read endurance being greater than the second read endurance and the first write cyclability being less than the second write cyclability.

2. The computer (CALC) according to claim 1, wherein the first sub-word comprises N bits, the second sub-word comprises M + K bits, with M and N being two non-zero natural integers and K being a natural integer;

and wherein the K most significant bits of the second sub-word ($w_{Fe}$) have an intersection of equal weight with the first sub-word ($w_{Ox}$) and are repeated in the first and second set of weight memories (MEM_2, MEM_1),
the variable processing circuit (CTV) comprising:

- a variable reducer circuit (CRV) for generating at least one first operational variable ($w_{op1}$, $w_{op3}$) of O bits, with O being a non-zero natural integer that is less than M + N; with said one first operational variable ($w_{op1}$) corresponding to the rounding or the truncation of the second sub-word ($w_{Fe}$) concatenated with the N - K most significant bits of the first sub-word (wox).

3. The computer (CALC) according to claim 2, wherein the variable processing circuit (CTV) further comprises an assembly circuit (CAV) configured to generate a second operational variable ($w_{op2}$) of M + N bits by concatenating, for each digital variable (w), the second sub-word ($w_{Fe}$) with the N - K most significant bits of the first sub-word ($w_{Ox}$) when executing the operation for updating the digital variable.

4. The computer (CALC) according to claim 3, further comprising an updating circuit (CMAJ) configured to carry out the following steps for each digital variable (w) for each iteration of the first operating phase, during the operation for updating the digital variable:

- computing a gradient for the first operational variable ($w_{op1}$)
- and applying said gradient to the second operational variable ($w_{op2}$),
- updating the second sub-word ($w_{Fe}$) in the second set of weight memories (MEM _2) by copy-

ying the bits of equal weight of the second operational variable ($w_{op2}$) after applying the gradient.

5. The computer (CALC) according to the preceding claim, wherein, following the last iteration of the first operating phase, the updating circuit (CMAJ) is configured to carry out the following step for each digital variable:

- updating the K intersection bits in the first sub-word ($w_{Ox}$) by copying the K bits of equal weight previously updated from the second sub-word ($w_{Fe}$).

6. The computer (CALC) according to any one of claims 2 to 5, wherein, during the second operation for using the digital variable, for each digital variable:

- the variable processing circuit (CTV) is configured to generate a third operational variable ($w_{op3}$) comprising at least the sub-word ($w_{Ox}$);
- the computation network (RC) receives the third operational variable ($w_{op3}$) as an operand.

7. The computer (CALC) according to the preceding claim, wherein the third operational variable ($w_{op3}$) further comprises at least part of the second sub-word ($w_{Fe}$).

8. The computer (CALC) according to any one of the preceding claims, wherein the digital variable (w) is in a floating-point format comprising a mantissa, an exponent and a sign;
and wherein the first sub-word ($w_{Ox}$) comprises at least the exponent and the sign; the second sub-word ($w_{Fe}$) comprises at least the mantissa.

9. The computer (CALC) according to any one of the preceding claims, wherein the first set of memories (MEM_1) is a plurality of OxRAM oxide-based resistive memories.

10. The computer (CALC) according to any one of the preceding claims, wherein the second set of memories (MEM_2) is a plurality of FeRAM ferroelectric polarisation memories.

11. The computer (CALC) according to claim 10 in combination with claim 9, wherein the FeRAM ferroelectric polarisation memories and the OxRAM oxide-based resistive memories are produced on the same semiconductor substrate.

12. The computer (CALC) according to any one of the preceding claims configured to implement an artificial neural network, with the neural network being made up of a series of layers ($C_k$, $C_{k+1}$) each being

formed by a set of neurons, with each layer being associated with a set of synaptic coefficients ($w_{i,j}$), wherein:

- the digital variables are the synaptic coefficients of the neural network;
- the first operating phase is a learning phase;
- the second operating phase is an inference phase;
- the first operation for using digital variables involves propagation of the learning input data ($w_{i,j}$) or backpropagation of the learning errors ($\delta$);
- the second operation for using digital variables involves propagation of the inference input data;
- the computation network (RC) is capable of computing weighted sums per operational variable ($w_{op1}$, $w_{op2}$, $w_{op3}$).

env
29x29

conv1
32(26x26)

pool1
32(13x13)Max

conv2
48(9x9)

pool2
48(3x3)Max

fc1
200

fc2
43

**Fig. 1**

**Fig. 2a**

**Fig. 2b**

**Fig. 3a**

w | 1 | 0 | 0 | 1 | 1 | 1 | 1 | 0 | 0 | 0 | 0 | 1 | 0 | 1 | 1 | 1 | 0 |

N bits

$w_{ox}$ | 1 | 0 | 0 | 1 | 1 | 1 | 1 | 1 | 0 | 0 | 0 | 0 |

(k bits) (M bits)

$w_{Fe}$ | 1 | 0 | 0 | 0 | 0 | 1 | 0 | 1 | 1 | 1 | 0 |

Vers bits moins significatifs

**Fig. 3b**

**Fig. 3c**

$w_{Fe}$ provenant de MEM_2

$w_{ox}$ provenant de MEM_1

CRV

CAV

CTV

$w_{op1}$
(O bits)

$w_{op3}$
(O bits)

$w_{op2}$
(M+N bits)

**Fig. 4a**

**Fig. 4b**

**Fig. 5a**

**Fig. 5b**

**Fig. 6**

| | S | Exposant | | | | | | Mantisse | | | | | | | | | | |
|---|---|---|---|---|---|---|---|---|---|---|---|---|---|---|---|---|---|---|
| w | 1 | 0 | 0 | 1 | 1 | 1 | 1 | 0 | 0 | 0 | 0 | 1 | 0 | 1 | 1 | 1 | | |
| $w_{ox}$ | 1 | 0 | 0 | 1 | 1 | 1 | 1 | 0 | 0 | 0 | 0 | | | | | | | |
| $w_{Fe}$ | | | | 1 | 1 | 1 | 0 | 0 | 0 | 0 | 1 | 0 | 1 | 1 | 1 | | | |

## Fig. 7